# EUROPÄISCHE PATENTSCHRIFT

(11) **EP 4 229 019 B1**
(45) Veröffentlichungstag und Bekanntmachung des Hinweises auf die Patenterteilung: **18.02.2026**
(21) Anmeldenummer: 21798299.0
(22) Anmeldetag: 14.10.2021
(51) Int. Cl.: C04B 28/04, C04B 40/00

(54) **BAUSTOFFADDITIV FÜR ZEMENTBASIERTE BAUSTOFFE**
BUILDING MATERIAL ADDITIVE FOR CEMENT-BASED BUILDING MATERIALS
ADDITIF DE MATÉRIAU DE CONSTRUCTION POUR DES MATÉRIAUX DE CONSTRUCTION À BASE DE CIMENT

(30) Priorität: 14.10.2020 DE 102020126940; 16.10.2020 DE 102020127380
(43) Veröffentlichungstag der Anmeldung: 23.08.2023
(73) Patentinhaber: ML7 Entwicklungs GmbH, 14057 Berlin (DE)
(72) Erfinder: LÜBNITZ, Michael, 14193 Berlin (DE)
(74) Vertreter: Stork Bamberger Patentanwälte PartmbB
(86) Internationale Anmeldenummer: PCT/EP2021/078398
(87) Internationale Veröffentlichungsnummer: WO 2022/079146

(56) Entgegenhaltungen:
- DE-A1- 102016 106 196
- US-A- 4 126 470

## Beschreibung

Die Erfindung betrifft Baustoffadditive für Baustoffe auf Zementbasis, wobei die Baustoffe mindestens eine Substanz, ausgewählt aus Zement, Kalk, Gips und Tonerdeschmelzzement enthalten. Die Erfindung betrifft ferner die Verwendung des Baustoffadditivs sowie Baustoffe, die das Baustoffadditiv enthalten.

Solche Baustoffe umfassen insbesondere vorgefertigte Fertigbetonelemente und Betonformteile, die industriell, halbindustriell oder manuell hergestellt werden und in fertiger Form auf die Baustelle geliefert und dort verbaut werden, Baustellenbeton, also Beton, der erst auf der Baustelle gemischt, zum Verbaupunkt gebracht und am Verbaupunkt trocknet und aushärtet und aus dem z.B. Putze, Estriche, Verfüllungen, Ausgleichsmassen, Betonformteile hergestellt werden, und Transportbeton, der im Mischwerk hergestellt und im Transportmischer in nicht ausgehärteter Form an die Baustelle angeliefert wird.

In der Regel basieren Betone, aus denen die oben genannten Produkte hergestellt werden, auf Zement als anorganischem Bindemittel. Diese Betone können als zusätzliches Bindemittel Gips, Tonerdeschmelzzement und Kalk in variierenden Anteilen im Bindemittelmix enthalten. Der Bindemittelmix wird mit Wasser gemischt. Üblicherweise werden dem Beton Aggregate wie Kies, Sand und Schotter, Beimahlstoffe wie Aschen, Hochofenschlacken oder Silikastäube und chemische Additive zur Verbesserung, Erzielung oder Vermeidung bestimmter Eigenschaften im fertigen Beton oder zur Optimierung des Mischprozesses zugegeben.

Der Markt fordert eine schnellstmögliche Herstellung, Weiterbearbeitung und Einbau der genannten Produkte. Das wird durch beschleunigte Trocknung bei gleichzeitigem Erreichen erforderlicher Festigkeiten und anderer geforderter technischer Eigenschaften erreicht. Das Ziel kann also sein, eine maximal erlaubte Restfeuchte oder eine Mindestfestigkeit dieser Produkte schnellstmöglich zu erreichen, dauerhaft einzuhalten und zu unterschreiten. Gleichzeitig sollte dabei, eine verbesserte, leichtere Verarbeitung bei der Herstellung und Anwendung des Produkts einhergehen und, wenn möglich, der gewohnte Arbeitsablauf bei der Produktherstellung nicht oder nur geringfügig geändert werden.

Die Herstellung und Verarbeitung von Betonmischungen für Estrich, Fertigteile oder Transportbeton für Bodenplatten oder Wandelemente hat sich in den vergangenen Jahren nicht grundlegend verändert. Innovationen sind eher auf dem Gebiet von Zusatzmitteln oder Additiven zu beobachten als bei Betonen selbst.

Um eine schnellere Trocknung zu erreichen, kann der Wassergehalt in zementbasierten Mischungen durch den Einsatz von Fließmitteln reduziert werden, jedoch wird dadurch der Beton oft schwerer zu verarbeiten, und die Endfestigkeit reduziert sich zum Teil erheblich. Um die Verarbeitung zu erleichtern und den Beton leichtgängig zu machen, werden üblicherweise Tenside eingesetzt. Der Nachteil von Tensiden ist, dass sich Luftporen bilden, deren Einsatz die Dichte zum Beispiel eines Estrichs oder eines Fertigbetonteils soweit reduzieren kann, dass geforderte Mindestfestigkeiten nicht mehr erreicht werden. Auch Produkte aus Transportbeton oder Baustellenbetons erreichen so die geforderten Festigkeiten oft nicht.

Fließmittel reduzieren zwar den Wasseranteil im Betongemisch, führen aber nicht zwangsläufig zu einer schnelleren Trocknung, da sich zwar weniger Wasser im Beton befindet, dieses Wasser aber nicht die Neigung hat, sich schneller aus dem Gefüge zu bewegen. Betrachtet man Estrich, bewirkt Fließmittel zwar einen geringeren Wassereinsatz, da aber das verbleibende Wasser sich nicht schneller aus dem Gefüge bewegt, wird keine beschleunigte Belegreife erreicht, Im Ergebnis führt ein geringerer Wassergehalt einer Betonmischung nicht zwangsläufig zu verkürzten Trocknungszeiten und schnellerer Belegreife.

US 4126470 A betrifft eine zementäre Zusammensetzung, die inter alia Polyethylenglykol umfasst, und thematisiert die Menge an Anmachwasser im Zusammenhang mit den Abbinde- und Erhärtungszeiten.

Grundsätzlich sind heutige Betone schneller trocken und Estriche deutlich früher belegreif als vor 20 Jahren. Unter optimalen Bedingungen sind im Estrich Restfeuchten von nicht mehr als 3,1 Massen-% nach 14 bis 28 Tagen möglich, wobei die Trocknungszeit u.a. von der Aufbauhöhe des Estrichs, der Qualität der eingesetzten Rohstoffe und der Menge des bei der Herstellung eingesetzten Wassers abhängt. Kleine Abweichungen der optimalen Mischungen und Abläufe bei der Herstellung können leicht zu Trocknungszeiten von mehr als 90 Tagen führen.

Neuere Entwicklungen versprechen Belegreife nach drei Tagen unter sehr speziellen Bedingungen, die in der Realität nicht oder nur mit erheblichem Aufwand erreicht werden. So beträgt die Verarbeitungszeit unter 45 Minuten, d.h. die Verarbeitung muss innerhalb von 45 Minuten abgeschlossen sein, und außerdem sind diese Systeme sehr teuer. Sie werden daher nur in Sonderfällen eingesetzt (max. 1 % aller Baustellen).

Der Markt fordert eine frühe Trocknung von Betonprodukten jeder Art, die unter normalen Baustellen- oder Herstellungsbedingungen erreicht werden soll. Im Bereich des Estrichbaus wird eine Belegreife nach sieben Tagen dringend gesucht. Optimal wäre eine noch frühere Belegreife nach drei Tagen. Gleichzeitig sollen die Kosten für Zusatzmittel die Gesamtkosten des Gewerks nur geringfügig erhöhen. Bei der Herstellung von Betonfertigteilen erlauben Trocknungsbeschleuniger ein schnelleres Ausschalen aus der Form und damit eine wirtschaftlichere Nutzung der eingesetzten Fertigungsanlagen. Im Bereich des Transportbetons gibt es eine sehr große Anzahl von Anwendungen, denen jeweils eine andere Rezeptur von Bindemittel und Zuschlagstoffen zugrunde liegt.

Die Aufgabe der Erfindung war es daher, ein Baustoffadditiv zu entwickeln, das die Trocknung von Baustoffen erheblich beschleunigt. Dabei muss die Feuchte den Beton nachweislich verlassen und nicht nur "eingehaust" oder für Messgeräte "unsichtbar" gemacht werden. Vorhandene Feuchte darf nicht so maskiert werden, dass sie zunächst nicht mehr detektierbar ist, da ein solches Vorgehen das Entweichen der Feuchte und damit einhergehenden Schäden nur in die Zukunft verlagert. Idealerweise sollte die Restfeuchteprüfung nach Norm erfolgen und zwar so, dass keine erhöhten Restfeuchtewerte freigegeben werden müssen.

Eine weitere Aufgabe bestand darin, trotz verbesserter Trocknungseigenschaften sicherzustellen, dass die Festigkeit nicht nachteilig beeinflusst wird, sondern - im Gegenteil - eine erhöhte Festigkeit und Frühfestigkeit (Biegezug- und/oder Druckfestigkeit) erreicht werden kann.

Weiterhin war eine verbesserte Verarbeitbarkeit des Betons wünschenswert, da diese die Handhabung auf der Baustelle maßgeblich vereinfachen würde.

Schließlich war es eine Aufgabe, die Menge an Wasser, die dem Beton bei der Herstellung zugesetzt werden muss, zu reduzieren, denn je weniger Wasser zu Beginn im Beton vorhanden ist, umso weniger Wasser muss später auch vom Beton abgegeben werden, um die gewünschte Restfeuchte zu erreichen.

Das Baustoffadditiv sollte einfach zu dosieren und in den Bindemittelmix einzubringen sein. Betonfertigteile sollen schneller ausgeschalt, transportiert und verbaut werden können, Estriche sollen schneller belegreif werden und Transportbetone sollen schneller trocknen. Das Baustoffadditiv soll für Betone aller Art und insbesondere für Estriche, Ausgleichsmassen, Verfüllungen jeder Art und Betonfertigteile einsatzfähig sein.

Die maximal erlaubte Restfeuchte von Betonen und Gipsmischungen sollte in kürzerer Zeit erreicht werden als derzeit möglich. Am Beispiel eines Estrichs war das Ziel, die Restfeuchte innerhalb von 3 Tagen unter 3,1% zu reduzieren, um "Belegreife" zu erreichen, also den Punkt, an dem die Folgegewerke, die auf den getrockneten Estrich aufbauen, mit ihrer Arbeit beginnen können. Dabei muss neben der beschleunigten Trocknung auch die nach Norm geforderte Biegezugfestigkeit des Estrichs erreicht werden.

Überraschenderweise wurde festgestellt, dass ein Baustoffadditiv für Baustoffe auf Zementbasis bestehend aus einer Wirkkomponente, die aus folgenden Substanzen besteht:
a) 35 bis 95 Gew.-%, insbesondere 50 bis 90 Gew.-%, mindestens eines Polyethylenglykols,
b) 5 bis 45 Gew.-%, insbesondere 10 bis 40 Gew.-%, mindestens einer Verbindung ausgewählt aus der Gruppe bestehend aus natürlichen ethoxylierten Harzen und ethoxylierten Kunstharzen, und
c) 0 bis 40 Gew.-%, insbesondere 0,1 bis 35 Gew.-%, mindestens eines Entschäumers,
wobei die Summe der Komponenten a), b) und c) 100 Gew.-% ergibt, diese Aufgaben löst und, dem Anmachwasser des Bindemittels oder Bindemittelmix beigegeben, die Trocknung von Betonen und zementbasierten Bindemittelmischungen extrem beschleunigt.

Dabei ist zu beachten, dass die beiden Komponenten a und b den Trocknungsvorgang bereits beschleunigen, jedoch die Kombination der drei Komponenten a), b) und c) in der Wirkweise bevorzugt ist. Ferner sorgt das erfindungsgemäße Baustoffadditiv dafür, dass für den Anmachvorgang weniger Wasser zugegeben werden muss. Gleichzeitig weist der entstehende Beton eine - verglichen mit herkömmlich hergestelltem Beton - höhere Festigkeit auf. Schließlich erleichtert das erfindungsgemäße Baustoffadditiv die Verarbeitbarkeit des Betons maßgeblich.

Die Formulierung "Baustoff auf Zementbasis" bedeutet dabei, dass es sich um einen Baustoffmix, also eine Mischung aus Bindemittel, Kies und Wasser handelt, bei dem das Bindemittel zu mindestens 50 Gew.-%, insbesondere zu mindestens 60 Gew.-% und besonders bevorzugt zu mindestens 70 Gew.-% aus Zement besteht, während andere Bindemittel wie insbesondere Gips, Kalk oder Tonerdeschmelzzement insgesamt zu maximal 49 Gew.-%, insbesondere maximal 40 Gew.-% und besonders bevorzugt zu maximal 30 Gew.-% enthalten sind. Besonders bevorzugt weist das Bindemittel einen CEM I nach DIN EN 197 auf, da dieser die benötigten Festigkeiten verlässlicher erreicht.

Mit dem erfindungsgemäßen Baustoffadditiv versehene Estriche, sind nach drei bis sieben Tagen belegreif. Die maximale Restfeuchte ist nachhaltig unterschritten, das Wasser wird nachweislich aus dem System abgegeben und es findet keine schädliche Resorption statt. Die Beigabe weiterer Additive oder anderer Hilfsmittel zum Erreichen der beschleunigten Trocknung ist nicht erforderlich.

Mit dem erfindungsgemäßen Baustoffadditiv versehener Beton, auch Estriche und Betone, die verdichtet werden müssen, lassen sich erheblich leichter verarbeiten.

Das Baustoffadditiv bewirkt eine beschleunigte Trocknung des Bindemittelgemisches, bei der:
1. das eingesetzte Anmachwasser nachweislich entweicht, aber
2. gleichzeitig die für die Hydratation hinreichende Menge Wasser im Bindemittelmix verbleibt und
3. keine schädigende Resorption stattfindet.

Grundsätzlich ist zu hinterfragen, ob die durch das Baustoffadditiv reduzierte verfügbare Wassermenge, die für die Hydratation bereitsteht, das Betongefüge derart an der Kristallisation hindert und derart schwächt, dass geforderte Mindestfestigkeiten nicht mehr erreicht werden. Es zeigt sich jedoch das Gegenteil. Durch den Einsatz des erfindungsgemäßen Baustoffadditivs können höhere Festigkeitswerte erreicht werden als ohne das Baustoffadditiv.

Des Weiteren ist wichtig, dass das Baustoffadditiv den Wasserbedarf einer Betonmischung reduziert, er also als Fließmittel wirkt. Am Beispiel Estrich zeigt sich, dass der Wasserbedarf bei der Herstellung des Estrichs im Estrichmischer erheblich sinkt. Bei einem Mischervolumen von 200 Litern beträgt der Wasserbedarf eines CTF4 Estrichs 34 Liter. Abhängig von der Art und Feuchte des eingesetzten Kieses und des verwendeten Bindemittels wird dieser Wasserbedarf um 10-25% reduziert.

Die vorliegende Erfindung ist in breitem Spektrum einsetzbar. Das Baustoffadditiv kann in Beton, der als Bindemittel Zement, hier bevorzugt Zement der Normklasse CEM I oder eine Bindemittelmixtur, welche Zement, Kalk, Gips, Tonerdeschmelzzement oder eine Mischung daraus enthält, enthält, eingesetzt werden, wobei Zement in jedem Fall zu mindestens 50 Gew.-% enthalten ist, es sich also um einen Baustoff auf Zementbasis handelt. Die Anzahl an Produkten und deren Varianten, die mit diesen Bindemitteln und dem erfindungsgemäßen Baustoffadditiv trocknungsbeschleunigt hergestellt werden können, ist weit. So ist der Einsatz des Baustoffadditivs bei der Herstellung aller eingangs genannten Produkte möglich:
Solche Baustoffe umfassen insbesondere
1. vorgefertigte Fertigbetonelemente und Betonformteile, die industriell, halbindustriell oder manuell hergestellt werden und in Ihrer fertigen Form auf die Baustelle geliefert und dort verbaut werden, z.B. Fertigelemente für den Hausbau oder Kanalisationsbau, Bahnschwellen, Bordsteine, individuelle oder standardisierte Fertigelemente, Sichtbetonelemente, um nur einige zu nennen;
2. Baustellenbeton, also Beton, der erst auf der Baustelle gemischt, zum Verbaupunkt gebracht und am Verbaupunkt trocknet und aushärtet (hydratisiert), z.B. Bodenplatten, Deckenplatten, Schalungsverfüllungen, Putze, Estriche, Verfüllungen, Ausgleichsmassen, Sichtbetonelemente;
3. Transportbeton, der im Mischwerk hergestellt und im Transportmischer flüssig an die Baustelle angeliefert wird und aus dem z.B. die unter 1. und 2. genannten Produkte vor Ort hergestellt werden;
4. Fließestriche auf Zementbasis,
5. Porenbetone, die autoklaviert werden und Porenbetone, die nicht autoklaviert werden und bei deren Herstellung stattdessen ein alternatives Verfahren zur Aufschäumung verwendet wird, wie zum Beispiel ein Schäummittel oder Porenbildner. Porenbetone können industriell vorgefertigt oder auf der Baustelle hergestellt und eingebaut werden.

In der Regel basieren Betone, aus denen die unter 1. bis 5. genannten Produkte hergestellt werden, auf Zement als anorganischem Bindemittel. Diese Betone können besonders geeigneter Weise als zusätzliches Bindemittel Gips, Tonerdeschmelzzement und Kalk in variierenden Anteilen im Bindemittelmix enthalten. Üblicherweise werden dem Beton Aggregate wie Kies, Sand und Schotter, Beimahlstoffe wie Aschen, Hochofenschlacken oder Silikastäube und chemische Additive zur Verbesserung, Erzielung oder Vermeidung bestimmter Eigenschaften im fertigen Beton oder zur Optimierung des Mischprozesses zugegeben.

Besonders bevorzugt beträgt der Anteil der Komponente a) mindestens 40 Gew.-%, insbesondere mindestens 50 Gew.-%, vorzugsweise mindestens 55 Gew.-%, besonders bevorzugt mindestens 60 Gew.-%, insbesondere mindestens 65 Gew.-%. Der maximale Anteil der Komponente a) liegt vorzugsweise bei höchstens 90 Gew.-%, insbesondere höchstens 85 Gew.-%, vorzugsweise höchstens 80 Gew.-%. Ein besonders bevorzugter Bereich für die Komponente a) beträgt dabei von 50 bis 90 Gew.-%, vorzugsweise 55 bis 85 Gew.-%, weiter bevorzugt von 65 bis 80 Gew.-%.

Besonders bevorzugt beträgt der Anteil der Komponente b) mindestens 10 Gew.-%, insbesondere mindestens 12 Gew.-%, vorzugsweise mindestens 15 Gew.-%. Der maximale Anteil der Komponente b) liegt vorzugsweise bei höchstens 40 Gew.-%, insbesondere höchstens 35 Gew.-%, besonders bevorzugt höchstens 30 Gew.-%. Ein besonders bevorzugter Bereich für die Komponente b) beträgt dabei von 10 bis 40 Gew.-%, vorzugsweise 12 bis 35 Gew.-%, weiter bevorzugt von 15 bis 30 Gew.-%.

Besonders bevorzugt beträgt der Anteil der Komponente c) mindestens 0,1 Gew.-%, insbesondere mindestens 0,5 Gew.-%, vorzugsweise mindestens 1 Gew.-%, weiter bevorzugt mindestens 2 Gew.-%, noch mehr bevorzugt mindestens 5 Gew.-%, insbesondere mindestens 7 Gew.-%. Der maximale Anteil der Komponente c) liegt vorzugsweise bei höchstens 35 Gew.-%, insbesondere höchstens 30 Gew.-%, besonders bevorzugt höchstens 25 Gew.-%. Ein besonders bevorzugter Bereich für die Komponente c) beträgt dabei von 0,1 bis 35 Gew.-%, vorzugsweise 2 bis 30 Gew.-%, weiter bevorzugt von 4 bis 25 Gew.-%.

In einer weiteren besonders bevorzugten Variante der vorliegenden Erfindung besteht die Wirkkomponente des Baustoffadditivs aus
a) 55 bis 85 Gew.-%, insbesondere 65 bis 80 Gew.-%, mindestens eines Polyethylenglykols,
b) 12 bis 35 Gew.-%, insbesondere 15 bis 30 Gew.-%, mindestens einer Verbindung ausgewählt aus der Gruppe bestehend aus natürlichen ethoxylierten Harzen und ethoxylierten Kunstharzen und
c) 2 bis 30 Gew.-%, insbesondere 4 bis 25 Gew.-%, mindestens eines Entschäumers.

Eine solche Zusammensetzung bewirkt eine besonders schnelle Trocknung bei gleichzeitig gegebener guter Verarbeitbarkeit des Baustoffes.

Es zeigt sich, dass die Trocknungswirkung von den Komponenten a und b erzielt wird. Die Komponenten a und b neigen jedoch dazu, in wässriger Lösung Luftporen zu bilden. Luftporen führen zur Gewichtsreduktion des Betons und damit zu einer reduzierten Festigkeit des getrockneten Betons. Um diesen Effekt zu minimieren, ist es daher besonders vorteilhaft, wenn mit Komponente c ein Entschäumer beigegeben wird. Dabei ist grundsätzlich jeder Entschäumer geeignet. Allerdings sind Entschäumer auf Silikonbasis weniger geeignet, da sie die Betonfestigkeit reduzieren. Ebenfalls weniger geeignet, aber verwendbar sind Entschäumer, die nur in bestimmten Temperaturbereichen stabil sind, solche, die nicht frostresistent sind oder diejenigen, die einen bestimmten pH-Wert benötigen, der von dem des in Wasser gelösten Bindemittels abweicht.

Das eingesetzte Polyethylenglykol (PEG), das auch als Macrogol bezeichnet wird, weist vorzugsweise ein Molgewicht Mw von mindestens 200 g/mol, insbesondere von mindestens 500 g/mol, bevorzugt mindestens 1.000 und besonders bevorzugt mindestens 1.500 g/mol auf. Weiterhin bevorzugt weist das eingesetzte PEG ein Molgewicht von bis zu 20.000 g/mol, vorzugsweise bis zu 10.000 g/mol und besonders bevorzugt von bis zu 8.000 g/mol auf. Bevorzugt beträgt das Molgewicht des Polyethylenglykols von 200 bis 20.000 g/mol, insbesondere von 500 bis 15.000 g/mol, besonders bevorzugt von 1.000 bis 10.000 g/mol und ganz besonders bevorzugt von 1.500 bis 8.000 g/mol.

Neben einfachem, d. h. unsubstituiertem, PEG kann in einer bevorzugten Ausführungsform auch Methoxy-Polyethylenglycol (MPEG), d. h. methyliertes Polyethylenglycol, oder eine Mischung aus einem oder mehreren PEGs und/oder einem oder mehreren MPEGs als Komponente a) zum Einsatz kommen, Das eingesetzte MPEG weist vorzugsweise ein Molgewicht Mw von mindestens 200 g/mol, insbesondere von mindestens 500 g/mol, bevorzugt mindestens 750 g/mol auf. Weiterhin bevorzugt weist das eingesetzte PEG ein Molgewicht von bis zu 20.000 g/mol, vorzugsweise bis zu 10.000 g/mol und besonders bevorzugt von bis zu 5.000 g/mol und insbesondere von bis zu 2.000 g/mol auf. Durch die Verwendung von MPEG wird die Gesamtrocknungsgeschwindigkeit positiv beeinflusst, indem die zeitliche Verzögerung durch den Trocknungsprozess eingeschränkt wird, da der Trocknungsvorgang linear verläuft.

Die Komponente b) ist ein natürliches Harz oder ein Kunstharz, welches durch chemische Anpassung wasserlöslich wird. Hierzu wird das Harz ethoxyliert. Ethoxylierung ist die Anlagerung von Ethylenoxid (Oxiran) an das Harz. Das Verfahren ist dem Fachmann hinreichend bekannt.

Mögliche Kunstharze, die für die vorliegende Erfindung zum Einsatz kommen können, sind Phenolharze, Epoxidharze, Polyesterharze, Acrylnitril-Butadien-Styrol-Harze (ABS-Harze), Polyacrylate, Alkydharze, Polyurethanharze, Polyamidharze, Vinylesterharze und Furanharze.

Natürliche Harze sind für die vorliegende Erfindung besonders bevorzugt.

Als natürliche Harze sind Tallöl, Wurzelharz, Balsamharz, als Kolophonium bezeichnete Harze und weitere Harze auf Bernsteinbasis und Addukte von Maleinsäure ganz besonders bevorzugt, insbesondere Kolophonium ist als bevorzugtes natürliches Harz zu nennen. Weitere bevorzugte Verbindungen als Komponente b) sind Diterpensäuren und Triterpensäuren und ihre Seifen (insbesondere die Kalium- und Natriumseifen). Besonders bevorzugt unter den Diterpensäuren sind Abietane, vor allem Abietinsäure, Neoabietinsäure, Levopimarsäure, Palustrinsäure, Dehydroabietinsäure, sowie Pimarane und Isopimarane, insbesondere Pimarsäure, Sandaracopimarsäure und Podocarpinsäure, und Labdane, insbesondere Copalsäure, Eperuesäure, Labdanolsäure, Polyalthinsäure, Pinifolsäure. Bei den Triterpensäuren sind folgende Substanzen besonders bevorzugt: Dammarolsäure, Tirucallane, insbesondere (Iso)-Masticadienonsäure, Elemolsäure und Elemonsäure, Oleanane, insbesondere Oleanonsäure, Oleanolsäure, Moronsäure und α-Boswelliasäure, Ursane, insbesondere Ursolsäure, Ursonsäure und β-Boswelliasäure sowie das Lupan Lupeolsäure. Auch die aromatischen Säuren Zimtsäure und Benzoesäure sowie deren Benzyl- und andere Ester sind besonders geeignet.

Der Entschäumer (Komponente c) kann aus einer enormen Vielzahl möglicher Entschäumer gewählt werden. Verfügbare Arten von Entschäumern sind Silikon-, Polymer- und mineralölbasierte Entschäumer. Silikonbasierte Entschäumer sind als Konzentrat, Emulsion, Pulver oder Lösung verfügbar. Polymerbasierte Entschäumer können als Konzentrat, Emulsion oder Lösung vorliegen. Besonders bevorzugte polymerbasierte Entschäumer sind solche auf Basis von Polyalkylenglycolethern. Mineralölbasierte Entschäumer sind als Konzentrat oder Emulsion verfügbar. Grundsätzlich können alle Varianten als gefriergetrocknete Version in Pulverform vorliegen. Die allermeisten Varianten eignen sich im Rahmen der vorliegenden Erfindung, da sie die Luftporen, die von Komponenten a) und b) erzeugt werden, eliminieren. Unterschiede zeigen sich wie folgt:
A- Im Wirkungsgrad:
   In der einzusetzenden Menge, um die im Mischprozess entstehenden Luftporen hinreichend zu eliminieren.
B- In der Verträglichkeit mit dem Bindemittel:
   Eine Unverträglichkeit zeigt sich, indem die 28-Tage Festigkeit der hergestellten Prüflinge nicht die erforderliche Mindestfestigkeit erreicht und die Prüflinge eine geringere Festigkeit aufweisen als das 0-Muster.
C- Temperaturempfindlichkeit:
   Das hergestellte Baustoffadditiv ist nicht frostsicher. Entweder verliert er seine Wirkung nach Frosteinwirkung komplett oder er muss durch aufwendiges Erwärmen wieder aktiviert werden.

Silikonbasierte Entschäumer schwächen das Betongefüge und verringern die Endfestigkeit eines Betons, da Silikon, wie dem Fachmann bekannt, die Kristallbildung im Beton behindert. Der Einsatz silikonbasierter Entschäumer ist möglich, aber nur sinnvoll, wenn die erforderlichen Mindestfestigkeiten des Betons auch erreicht werden. Im Estrich würde das zu einem erhöhten Einsatz von Zement in der Herstellung führen, weshalb silikonbasierte Entschäumer weniger geeignet sind. Ihr Einsatz ist dann sinnvoll, wenn die Beigabe des Baustoffadditivs in Pulverform erfolgen muss.

Polymerbasierte Entschäumer sind temperaturempfindlich. Bei niedrigen Temperaturen kann sich ein Frostschaden einstellen, der mühsames Erwärmen des Baustoffadditivs notwendig machen kann. Oft ist ein Frostschaden nicht reversibel, das Baustoffadditiv verliert seine Wirksamkeit insgesamt, und das Baustoffadditiv muss entsorgt werden. Bei zu hohen Temperaturen kann der Entschäumer im Baustoffadditiv seine Wirkung zumindest teilweise verlieren und muss aufwendig entsorgt werden.

Besonders bevorzugt für die vorliegende Erfindung sind mineralölbasierte Entschäumer, die zwar auch frostempfindlich sein können, jedoch ist eine Wirkungseinschränkung durch Frost zumeist reversibel. Hohe Temperaturen (>35°C) sind meistens kein Problem.

Die folgende Tabelle 1 liefert einen Überblick:

### Entschäumer

Entschäumer Varianten und Ihre Trocknungswirkung i.V.m. Komponenten a und b gegenüber dem 0-Muster

**Tabelle 1: Entschäumer**

| **Bezeichnung** | **Lieferant** | **Typ** | **Trocknungswirkung i.V.m Komponenten a) und b) gegenüber 0-Muster** | **Nachteil** |
|---|---|---|---|---|
| Dispelair 262 | BCD Chemie, Hamburg | Ölbasiert | stark beschleunigend | - |
| Dispelair 268 | BCD Chemie, Hamburg | Ölbasiert | stark beschleunigend | - |
| | | | | |
| Dispelair 707 | BCD Chemie, Hamburg | Polymerbasiert | stark beschleunigend | nicht frostsicher, temperaursensitiv |
| Hoesch LVW | Hoesch Chemie, Düren | Polymerbasiert | stark beschleunigend | nicht frostsicher, temperatursensitiv |
| Foam Clear Esca-NP | Basildon Chemicals, Abington, UK | Polymerbasiert | stark beschleunigend | |
| KCC BC 2670 | Basildon Chemicals, Abington, UK | Polymerbasiert | stark beschleunigend | |
| | | | | |
| Xiameter AFE 0400 | BCD Chemie, Hamburg | Silikonbasiert | stark beschleunigend | Festigkeitsreduzierend |
| Xiameter ACP 1266 | BCD Chemie, Hamburg | Silikonbasiert | stark beschleunigend | Festigkeitsreduzierend |
| Hoesch FDP | Hoesch Chemie, Düren | Silikonbasiert | stark beschleunigend | Festigkeitsreduzierend |
| | | | | |
| ViaPor 9010 | CASEA Gips, Ellrich | Silikonbasiert, Pulver | beschleunigend | Festigkeitsreduzierend, hohe Einsatzmenge |
| Berolan DF-100 | CASEA Gips, Ellrich | Silikonbasiert, Pulver | beschleunigend | Festigkeitsreduzierend, hohe Einsatzmenge |
| CliqSmart CM 110 | CASEA Gips, Ellrich | Silikonbasiert, Pulver | beschleunigend | Festigkeitsreduzierend, hohe Einsatzmenge |

Im Rahmen der vorliegenden Erfindung sind polymerbasierte Entschäumer, mineralölbasierte Entschäumer oder Entschäumer, die auf pflanzlichen oder tierischen Ölen basieren, bevorzugt, wobei polymerbasierte und mineralölbasierte Entschäumer besonders bevorzugt sind. Besonders bevorzugte polymerbasierte Entschäumer sind solche auf Basis von Polyalkylenglycolethern. Ölbasierte Entschäumer können als Emulsion oder Konzentrat vorliegen. Alle getesteten Varianten erfüllen den Zweck und entfernen die Luftporen aus einer wässrigen Lösung der Komponenten a) und b). Ein Produktbeispiel für mineralölbasierte Entschäumer ist Dispelair 268 der BCD Chemie, Hamburg oder BC2370 der Hoesch Chemie, Düren. Pflanzenöle liegen vorzugsweise als Kombination von Mono- oder Diglyceriden einer Speisefettsäure vor. Ein Beispiel ist der Emulgator E471, der in der Lebensmittelindustrie in Brot und Backwaren eingesetzt wird.

Weiterhin geeignet als Entschäumer sind Polydimethylsiloxan und Silikonmischungen wobei das Molgewicht Mw hier keine Rolle zu spielen scheint. Produktbeispiele sind Dispelair 392 der BCD Chemie, Hamburg oder Hoesch FDP der Hoesch Chemie, Düren, die vergleichbare Trocknungsergebnisse liefern wie Ölbasierte Entschäumer, aber bei den Endfestigkeiten nach 28 Tagen Schwächen aufweisen können. Auch Trin-butyl-phosphat und Triisobutylphosphat sind als Entschäumer sehr geeignete Verbindungen. Die genannten Substanzen sind besonders gut dazu in der Lage, die Luftporen, die das Polyethylenglykol und das ethoxylierte natürliche Harz oder das ethoxylierte Kunstharz (Komponenten a) und b)) bilden und die die Stabilität des Baustoffes beeinträchtigen können, zu zerstören bzw. zu neutralisieren. Es werden keine Schaumblasen mehr geworfen, und es ergibt sich eine außerordentlich günstige Packstruktur des Baustoffes, was eine verbesserte und vereinfachte Verarbeitung des Betons bewirkt. Der Arbeitseinsatz bei der Herstellung eines Estrichs reduziert sich so um mindestens 10%.

Zusätzlich zur Wirkkomponente kann das Baustoffadditiv noch eine Zusatzkomponente enthalten, die dem Baustoff weitere positive Eigenschaften verleiht. Als Zusatzkomponente kommen in Frage ein Salz, ein Mittel zur Einstellung des pH-Werts, ein Antioxidationsmittel, eine Verarbeitungshilfe, ein Verflüssigungsmittel, ein Farbstoff und/oder ein Konservierungsmittel. Solche weiteren Bestandteile, die auf dem Gebiet der Betone und Gipse üblich sind, sind z.B. Salze wie Calciumnitrat, pH-Einstellmittel, Antioxidationsmittel oder Konservierungsmittel. Der Anteil solcher optionalen weiteren Bestandteile als Zusatzkomponente, falls vorhanden, liegt vorzugsweise unter dem der Wirckomponente und beträgt bevorzugt maximal 70 Gew.-%, besonders bevorzugt nicht mehr als 20 Gew.-% der Wirkkomponente.

Das Baustoffadditiv kann dem Bindemittelmix als Pulver ohne weitere Hilfsstoffe zugegeben werden. Liegt das Additiv in Pulverform oder anderer trockener Form vor kann es dem Zementpulver oder jedem anderen Bestandteil des Betons beigegeben werden. Eine Variante der Herstellung des Additivs als Pulver ist die Gefriertrocknung.

Das Baustoffadditiv kann in einer bevorzugten Ausführungsform somit als trockener Feststoff, als Pulver oder in jeder anderen nicht flüssigen Art hergestellt und eingesetzt werden. Hierzu können die Komponenten oder das Baustoffadditiv als Ganzes gefriergetrocknet werden, und/oder es werden feste oder pulverförmige Varianten der Komponenten a, b und/oder c ausgewählt, die als Gemisch entweder zu den trockenen Bestandteilen des Betons oder in das Anmachwasser gegeben werden. In einer bevorzugten Ausführungsform wird das zunächst in flüssiger Form vorliegende Baustoffadditiv als Ganzes gefriergetrocknet und dem Bindemittelmix oder dem gesamten Baustoffmix, also der Mischung aus Bindemittelmix und den weiteren Feststoffen wie Aggregaten, Beimahlstoffen und/oder Additiven zugegeben. Man erhält einen fertigen Bindemittelmix oder Baustoffmix einschließlich Baustoffadditiv, so dass nur noch Wasser zugegeben werden muss.

Vorzugsweise wird das Baustoffadditiv dem Bindemittelmix als Flüssigkeit, gelöst in Wasser als Hilfsmittel, beigegeben, so dass es bevorzugt als wässriges flüssiges Baustoffadditiv vorliegt. Dabei beträgt der Wasseranteil besonders vorteilhaft 0,1 bis 95 Gew.-%, vorzugsweise 15 bis 90 Gew.-%, insbesondere 25 bis 85 Gew.-%, und ganz besonders bevorzugt 35 bis 80 Gew.-%, bezogen auf die gesamte Baustoffadditiv-Wasser-Lösung.

Das Baustoffadditiv kann also als reine Wirkstoffkomponenten vorliegen und damit hochdosiert sein. Die Konzentration der Wirkstoffkomponenten a, b und c kann hier 100 Gew.-% betragen, wenn dem Baustoffadditiv keine weitere Substanz/Zusatzkomponente zugesetzt ist, was bevorzugt ist.

Ebenso kann das Baustoffadditiv in wässriger Lösung verdünnt vorliegen und als Flüssigkeit zugegeben werden. Letzteres ermöglicht eine besonders einfache Dosierung. Ein bevorzugtes Wasser-Wirkstoff-Verhältnis liegt bei Wasser : Wirkstoff = 20 : 80 bis 80 : 20. Solche Konzentrationen ermöglichen eine gute Dosierung, um im Endprodukt die gewünschte Menge Wirkstoff enthalten zu haben.

Wird das Baustoffadditiv auf der Baustelle in das Anmachwasser gegeben, so ist die Konzentration des Baustoffadditivs im Anmachwasser und somit in der Gesamtmischung erheblich geringer. Die Konzentration liegt dann im Promillebereich. Auf 1 Liter Anmachwasser kommen vorzugsweise zwischen 0,3 und 7 Gew.-‰, insbesondere zwischen 0,5 und 3 Gew.-‰ an Baustoffadditiv. Trotz dieser scheinbar geringen Konzentration ist das Baustoffadditiv vollumfänglich effektiv. Bei der Bestimmung der Menge an Anmachwasser ist der Feuchtigkeitsgehalt im Kies zu berücksichtigen.

Wenn man von einer üblichen Estrichmischung ausgeht, die auf 200 I Mischung 34 I Wasser enthält, ist das Baustoffadditiv in der fertigen Estrichmischung vorzugsweise mit einem Gehalt von 0,05 bis 1 Gew.-‰, insbesondere von 0,1 bis 0,5 Gew.-‰, enthalten. Die erforderliche Menge des Baustoffadditivs sollte dabei proportional zur Menge des eingesetzten Zementes gewählt werden, wird jedoch von Faktoren wie Zementgüte, Mahlfeinheit des Zements, Kornverteilung des Zements und Beimahlstoffen im Zement beeinflusst.

Die Beigabe des flüssigen Baustoffadditivs kann in das Anmachwasser oder in jede beliebige Komponente des Betons erfolgen. Bevorzugt ist jedoch die Beigabe in das Anmachwasser.

Das Baustoffadditiv kann auch in Zwischenformen, weder fest noch flüssig vorliegen, also als Gel oder zähe Masse.

Die Erfindung betrifft ferner die Verwendung des Baustoffadditivs als Trocknungsbeschleuniger zur Beschleunigung des Trocknungsvorganges bei Baustoffen auf Zementbasis. Wie bereits oben beschrieben, weist das erfindungsgemäße Baustoffadditiv hervorragende trocknungsbeschleunigende Eigenschaften auf und ermöglicht, dass die nach den entsprechenden Normen geforderten Restwassergehalte innerhalb kürzerer Zeit erreicht werden, als dies bei herkömmlichen Baustoffen auf Zementbasis ohne das erfindungsgemäße Baustoffadditiv der Fall ist.

Wie oben ausgeführt, bedeutet die Formulierung "Baustoff auf Zementbasis" dabei, dass es sich um einen Baustoffmix, also eine Mischung aus Bindemittel, Kies und Wasser handelt, bei dem das Bindemittel zu mindestens 50 Gew.-%, insbesondere zu mindestens 60 Gew.-% und besonders bevorzugt zu mindestens 70 Gew.-% aus Zement besteht, während andere Bindemittel wie insbesondere Gips und Kalk insgesamt zu maximal 49 Gew.-%, insbesondere maximal 40 Gew.-% und besonders bevorzugt zu maximal 30 Gew.-% enthalten sind. Besonders bevorzugt weist das Bindemittel einen CEM I nach DIN EN 197 auf, da dieser die benötigten Festigkeiten verlässlicher erreicht.

Dabei beträgt der Gewichtsanteil des Baustoffadditivs an der Mischung aus Baustoff und Baustoffadditiv vorzugsweise von 0,05 bis 1 Gew.-‰, insbesondere von 0,1 bis 0,5 Gew.-‰.

Wie oben bereits ausgeführt, stellt sich die Frage, ob die durch das Baustoffadditiv reduzierte verfügbare Wassermenge, die für die Hydratation bereitsteht, das Betongefüge derart an der Kristallisation hindert und derart schwächt, dass geforderte Mindestfestigkeiten nicht mehr erreicht werden. Es zeigt sich jedoch das Gegenteil. Durch den Einsatz des erfindungsgemäßen Baustoffadditivs werden höhere Festigkeitswerte erreicht als ohne das Baustoffadditiv, das somit auch als Festigkeitsverstärker für Beton und Betonprodukte wirkt, so dass die vorliegende Erfindung auch die Verwendung des erfindungsgemäßen Baustoffadditivs als Festigkeitsverstärker für Beton und Betonprodukte betrifft. Beton mit dem erfindungsgemäßen Baustoffadditiv weist eine erhöhte Festigkeit und Frühfestigkeit (Biegezug- und oder Druckfestigkeit) auf.

Darüber hinaus reduziert das erfindungsgemäße Baustoffadditiv den Wasserbedarf einer Betonmischung, das Baustoffadditiv wirkt also als Fließmittel. Am Beispiel Estrich zeigt sich, dass der Wasserbedarf bei der Herstellung des Estrichs im Estrichmischer erheblich sinkt. Bei einem Mischervolumen von 200 Litern beträgt der Wasserbedarf eines herkömmlichen CTF4 Estrichs 34 Liter. Abhängig von der Art und Feuchte des eingesetzten Kieses und des Zements wird dieser Wasserbedarf bei Einsatz des erfindungsgemäßen Baustoffadditivs um 10-25% reduziert. Die vorliegende Erfindung betrifft daher des Weiteren die Verwendung des erfindungsgemäßen Baustoffadditivs als Verarbeitungshilfe für Beton.

Besonders bevorzugt weist das erfindungsgemäße Baustoffadditiv alle Wirkungen gemeinsam auf, d. h. es wirkt als Trocknungsbeschleuniger, als Verarbeitungshilfe, als Fließmittel und als Festigkeitsverstärker für Beton auf Zementbasis. Damit verbessert und vereinfacht das erfindungsgemäße Baustoffadditiv die Betonverarbeitung in vielerlei Hinsicht maßgeblich.

Weiterhin betrifft die vorliegende Erfindung Baustoffe auf Zementbasis, die das erfindungsgemäße Baustoffadditiv enthalten. Dabei ist der Baustoff insbesondere ein vorgefertigtes Fertigbetonelement, ein Betonformteil, ein Baustellenbeton, ein Transportbeton oder ein Estrich, insbesondere ein Fließestrich.

Besonders bevorzugt enthält der Bindemittelmix oder der gesamte Baustoffmix, also die Mischung aus Bindemittelmix und den weiteren Feststoffen wie Aggregaten, Beimahlstoffen und/oder Additiven, das Baustoffadditiv in gefriergetrockneter Form. Dazu wird Baustoffadditiv, das zunächst als Flüssigkeit hergestellt wurde, als Ganzes gefriergetrocknet und dann dem Bindemittelmix oder dem Baustoffmix zugegeben. Man erhält einen fertigen Bindemittelmix oder Baustoffmix einschließlich Baustoffadditiv, so dass nur noch Wasser zugegeben werden muss. Man erhält auf diese Weise Schnellzement oder Schnellbeton.

Alle vorstehend zum Baustoffadditiv beschriebenen bevorzugten Ausführungsformen gelten auch für die erfindungsgemäße Verwendung und den erfindungsgemäßen Baustoff.

Der Baustoff kann neben den genannten Komponenten weitere übliche Zusatzmittel enthalten. Beispiele sind Korrosionsinhibitoren, Fließmittel, Schwindreduzierer oder Pigmente.

Gerade für Estriche ist die vorliegende Erfindung besonders geeignet, da die Trocknungsdauer, der Verarbeitungsaufwand, der initiale Wasserbedarf und die Festigkeitsentwicklung gerade für Estriche oftmals von besonderer Bedeutung sind, da hier die Belegreife eine wichtige Größe ist und das möglichst schnelle Trocknen eines Estrichs im Bau überaus wünschenswert ist.

Ein Verfahren zur Herstellung eines Zementestrichs umfasst die folgenden Schritte:
a) das Mischen von Komponenten umfassend Zement, Gesteinskörnung, Wasser und den erfindungsgemäßen Baustoffadditivs wie vorstehend beschrieben, um eine Estrichmischung zu erhalten,
b) das Verteilen der Estrichmischung in die gewünschte Form/auf der Ausbringungsfläche und
c) das Trocknen/ Aushärten der Estrichmischung.

Im ersten Schritt des Verfahrens werden Komponenten umfassend Zement, Gesteinskörnung, Wasser und das erfindungsgemäße Baustoffadditiv gemischt, um eine Estrichmischung zu erhalten. Um einen erfindungsgemäßen CTF4 Estrich (F4 steht für Biegezugfestigkeit nach 28 Tagen von mindestens 4,0 N/mm² oder mehr) zu erhalten werden pro m³ die folgenden Mengen benötigt: Zement (bevorzugt Portlandzement Cem I) 270kg, Kies 1705kg, Wasser 170,1kg und 0,75 Liter des erfindungsgemäßen Baustoffadditivs der Variante 1 (s.u.). Die Reihenfolge, in der die Komponenten gemischt werden, ist beliebig. Bevorzugt gibt man jedoch das Baustoffadditiv in das Wasser zu. Die üblichen Mischvorschriften zur Herstellung solcher Zementmischungen sind einzuhalten.

Wie allgemein bekannt, ist Zement ein anorganisches, hydraulisches Bindemittel. Bei Zugabe von Wasser bilden sich aus den Zementklinkerphasen Hydrate, wobei Wasser gebunden wird und der Zementleim sich unter Bildung des festen Zementsteins bzw. Zementprodukts verfestigt bzw. aushärtet. Der Zement umfasst vorzugsweise Portlandzement. Zur Herstellung von Zement wird Klinker bzw. Zementklinker entweder allein oder mit weiteren Hauptbestandteilen und/oder bis zu 5 Gew.-% Nebenbestandteilen fein gemahlen. Zur Regelung des Erstarrens wird ferner Calciumsulfat (Gips und/oder Anhydrit) in den Nebenbestandteilen zugesetzt.

Als weitere Hauptbestandteile und/oder Nebenbestandteile zur Herstellung des Zements können latent hydraulische und/oder puzzolanische und/oder inerte Zusatzstoffe zugesetzt werden. Beispiele sind Hüttensandmehl, Puzzolane, wie getempertes Phonolith oder Trass, Flugaschen, gebrannter Ölschiefer, Kalksteinmehl und Silikastaub. Zemente werden gemäß der Zusammensetzung klassifiziert. Hierfür existieren unterschiedliche, teilweise länderspezifische Normen, z.B. die DIN EN 197-1, in der die Zemente bezüglich des Anteils an Zementklinker und, falls vorhanden, der Art und Menge weiterer Bestandteile klassifiziert werden. Das erfindungsgemäße Additiv ist für alle Zementtypen geeignet, insbesondere für Portlandzement und Portlandkompositzemente, die neben Portlandzement z.B. mindestens einen weiteren Hauptbestandteil ausgewählt aus Hüttensandmehl, Silikastaub, Puzzolanen, Flugaschen, gebranntem Ölschiefer oder Kalksteine umfassen. Für Estriche sind Portlandkompositzemente bevorzugt.

Gemäß Klassifizierung in der Norm DIN EN 197-1 handelt es sich daher bevorzugt um einen Zement vom Typ CEM I (Portlandzement) oder CEM II (Portlandkompositzement). Für Estriche besonders geeignet ist ein Zement vom Typ CEM I und CEM II/A oder CEM II/B mit Kalksteinmehl der Klasse 42,5 R oder 42,5 N. Natürlich eignen sich auch Zementtypen, die bezüglich einer anderen Norm klassifiziert sind.

Je nach Anwendung variierend kann der Bindemittelmix Tonerdezement enthalten. Zwar ist Tonerdezement kostspielig, aber es hilft der Aushärtung von Portlandzement. Diese kann so schnell erfolgen, dass der Feststoffmix verzögert werden muss, um verarbeitbar zu bleiben. Portland/Tonerdezement schwindet zum Teil stark. Trocknungsgeschwindigkeit und Schwinden machen Tonerdezement keinen sinnvollen Bestandteil eines Estrichs, jedoch können andere Anwendungen diese Kombination bevorzugen. Auch beim Estrich kann der eingesetzte Bindemittelmix geringe Mengen an Tonerdezement enthalten, wobei nicht mehr als 5 Gew.-%, bevorzugt nicht mehr als 1 Gew.-%, bezogen auf das Gesamtgewicht des Bindemittelmixes Tonerdezement sein können, was aber wie gesagt nicht bevorzugt ist.

Als Gesteinskörnung können die üblichen Materialien verwendet werden, wie z.B. Rundkorn oder gebrochene Sande und/oder Kies, wobei eine Gesteinskörnung bis 8 mm bevorzugt wird. Eine Estrichmischung kann z.B. bis 4 mm Größtkorn, oder ein Beton bis 8 mm Größtkorn enthalten. Estriche werden auf Böden jeder Art aufgebracht, um eine feste, ebene Basis zu bieten. Die Estrichmischung ist bevorzugt kein Fließestrich.

### Beispiel Baustoffadditive (alle Angaben pro kg)

### Baustoffadditiv Variante 1:

20,0 Gew.-% PEG 4000 (Molgewicht 4.000g/mol)
2,5 Gew.-% ethoxyliertes natürliches Harz (Molgewicht der Ethoxylierung 50g/mol) - UFlakes der Firma Levaco
2,0 Gew.-% Entschäumer, Antifoam LVW der Julius Hoesch AG
75,5 Gew.-% Wasser

### Baustoffadditiv Variante 2:

5,0 Gew.-% PEG 8000 (Molgewicht 8.000 g/mol)
20,0 Gew.-% ethoxyliertes natürliches Harz (Molgewicht der Ethoxylierung 50g/mol) - UFlakes der Firma Levaco
1,5 Gew.-% Entschäumer XiaMeter AF-0400 der DOW Europe
73,5 Gew.-% Wasser

### Baustoffadditiv Variante 3:

1,5 Gew.-% PEG 6000 (Molgewicht 6.000g/mol)
2,0 Gew.-% % ethoxyliertes natürliches Harz (Molgewicht der Ethoxylierung 50g/mol) - UFlakes der Firma Levaco
1,5 Gew.-% Entschäumer DISPELAIR 707 der BCD Chemie
95,0 Gew.-% Wasser

### Baustoffadditiv Variante 4:

30 Gew.-% PEG 500 (Molgewicht 500g/mol)
3,0 Gew.-% ethoxyliertes natürliches Harz (Molgewicht der Ethoxylierung 50g/mol) - UFlakes der Firma Levaco
15,0 Gew.-% Entschäumer Berolan DF-100 der CASEA Deutschland GmbH
52,0 Gew.-% Wasser

### Baustoffadditiv Variante 5:

10 Gew.-% PEG 1000 (Molgewicht 1.000g/mol)
4,0 Gew.-% ethoxyliertes natürliches Harz (Molgewicht der Ethoxylierung 50g/mol) - UFlakes der Firma Levaco
4,0 Gew.-% Entschäumer Dispelair 268, BCD Chemie, Hamburg
77,0 Gew.-% Wasser

### Baustoffadditiv Variante 6:

27,5 Gew.-% PEG 2000(Molgewicht 2.000g/mol)
12,0 Gew.-% ethoxyliertes natürliches Harz (Molgewicht der Ethoxylierung 50g/mol) - UFlakes der Firma Levaco
15,0 Gew.-% Entschäumer Xiameter AFE 1266
45,5 Gew.-% Wasser

### Baustoffadditiv Variante 7:

6,0 Gew.-% PEG 10000 (Molgewicht 10.000g/mol)
0,5 Gew.-% ethoxyliertes natürliches Harz (Molgewicht der Ethoxylierung 50g/mol) - UFlakes der Firma Levaco
1,0 Gew.-% Entschäumer Hoesch FDP der Hoesch Chemie
92,5 Gew.-% Wasser

### Baustoffadditiv Variante 8:

5,0 Gew.-% PEG 12000 (Molgewicht 12.000g/mol)
5,0 Gew.-% ethoxyliertes natürliches Harz (Molgewicht der Ethoxylierung 50g/mol) - UFlakes der Firma Levaco
4,0 Gew.-% Entschäumer Hoesch LVW der Hoesch Chemie
86,0 Gew.-% Wasser

### Baustoffadditiv Variante 9:

10,0 Gew.-% PEG 1500 (Molgewicht 1.500g/mol)
3,0 Gew.-% ethoxyliertes natürliches Harz (Molgewicht der Ethoxylierung 50g/mol) - UFlakes der Firma Levaco
0,7 Gew.-% Entschäumer KCC Basildon BC 2370 der Basildon Chemicals
86,3 Gew.-% Wasser

### Baustoffadditiv Variante 10:

15,0 Gew.-% PEG 2000 (Molgewicht 2.000g/mol)
6,0 Gew.-% ethoxyliertes natürliches Harz (Molgewicht der Ethoxylierung 50g/mol) - UFlakes der Firma Levaco
1,2 Gew.-% Entschäumer KCC Basildon Foam Clear Esca-NP der Basildon Chemicals
77,8 Gew.-% Wasser

### Baustoffadditiv Variante 11:

15,0 Gew.-% MPEG 750 (Molgewicht 750g/mol)
6,0 Gew.-% ethoxyliertes natürliches Harz (Molgewicht der Ethoxylierung 50g/mol) - UFlakes der Firma Levaco
0,1 Gew.-% Entschäumer KCC Basildon Foam Clear Esca-NP der Basildon Chemicals
78,9 Gew.-% Wasser

### Beispiele Betonmischungen

### Beispiel 1: Estrich CTF4 mit Biegezugfestigkeit nach 28 Tagen > 4,0 N/mm²

Ein Estrich der Klasse CTF4 besteht aus den Bestandteilen Zement, Wasser und Kies. Pro m³ werden die folgenden Mengen benötigt:
- Zement (z.B. Cem I, 42,5N) 270 kg,
- Kies 1705 kg,
- Wasser 170,1 kg
- ein Baustoffadditiv der Varianten 1 bis 11 in einer Menge von 0,35 kg.

Die Mischung erfolgt üblicherweise in einem Estrichmischer, welcher üblicherweise 200 bis 220 Liter Mischvolumen besitzt. Die Mischreihenfolgen ist beliebig, jedoch hat sich in der Praxis die folgende Reihenfolge etabliert: 1. Teilmenge Kies, 2. Zement, 3. Wasser, 4. Restmenge Kies. Dabei wird das Baustoffadditiv vorab dem Wasser beigegeben, damit es sich besser im Mischer verteilt.

### Beispiel 2: Transportbeton für Bodenplatten, Festigkeitsklasse C 2025:

Ein Transportbeton der Klasse C2025 besteht aus den Bestandteilen Zement, Wasser, Aggregate und Additive.

Pro m³ werden die folgenden Mengen benötigt:
- Zement (Cem I, 52,5R) 350kg,
- Aggregate (einschließlich Mehlkorn und Feinstsand) 600kg
- Größtkorn 410 kg
- Wasser 165kg,
- Additive Polypropylenfaser 20mm, 2,0 kg
- Baustoffadditiv Variante 3, 0,5kg

Die Mischung erfolgt üblicherweise im Transportbetonwerk, die Anlieferung an die Baustelle erfolgt per Transportmischer. Bei der Herstellung des Betons ist die Mischreihenfolge beliebig, jedoch hat sich in der Praxis bewährt die Additive dem Anmachwasser beizugeben, damit sie sich besser in der Mischung verteilen.

### Beispiel 3 Fertigbetonteile, Wandelemente, Festigkeitsklasse C 2025:

Ein Beton der Klasse C2025 besteht aus den Bestandteilen Zement, Wasser, Aggregate und Additive.

Pro m³ werden die folgenden Mengen benötigt:
- Zement (Cem I, 52,5R) 350 kg,
- Aggregate (einschließlich Mehlkorn und Feinstsand) 600 kg
- Größtkorn 405 kg
- Wasser 165 kg,
- Additive: Polypropylenfaser 10 mm, 2,0 kg, Fließmittel MasterGlenium SKY 688 von BASF, 2,5 kg
- Baustoffadditiv Variante 6, 0,5kg

### Beispiel 4: Estrich CTF5 , Biegezugfestigkeit nach 28 Tagen > 5,0 N/mm2):

Ein Estrich der Klasse CTF5 besteht aus den Bestandteilen Zement, Wasser und Kies. Pro m³ werden die folgenden Mengen benötigt:
Zement (Cem II, 42,5N) 335kg
- Kies 1705kg
- Wasser 210kg
- Baustoffadditiv Variante 2, 0,5kg.

Die Mischung erfolgt üblicherweise in einem Estrichmischer, welcher üblicherweise 200-220 Liter Mischvolumen besitzt. Die Mischreihenfolgen ist gleich, jedoch hat sich in der Praxis die folgende Reihenfolge etabliert: 1. Teilmenge Kies, 2. Zement, 3. Wasser, 4. Restmenge Kies. Dabei wird das Baustoffadditiv vorab dem Wasser beigegeben, damit es sich besser im Mischer verteilt.

### Beispiel 5: Baustellenbeton für Wandelemente:

### Betonmischung für Betonfertigteile

Ein Transportbeton der Klasse C2025 besteht aus den Bestandteilen Zement, Wasser und Kies. Pro m³ werden die folgenden Mengen benötigt:
- Zement (Cem I, 42,5R) 350kg,
- Aggregate (einschließlich Mehlkorn und Feinstsand) 700kg
- Größtkorn, 22mm, 310kg
- Wasser 165kg,
- Additive entfallen (erlaubt sind bis 15% des Gesamtgewichts der Mischung)
- Baustoffadditiv Variante 7, 0,75kg

Die Mischung wird direkt auf der Baustelle hergestellt. Bei der Herstellung des Betons ist die Mischreihenfolge beliebig, jedoch hat sich in der Praxis bewährt die Additive dem Anmachwasser beizugeben, damit sie sich besser in der Mischung verteilen.

### Testmethoden:

Damit keine erhöhte Restfeuchte ins Spiel kommt werden nur die beiden Testmethoden nach Norm DIN EN 18560 Teil 1 angewandt.

### Testmethode 1: Gravimetrische Feuchtemessung (auch Trocknung im Darr Ofen)

Hier wird eine Probe der hergestellten Beispielmischung entnommen und bei 105°C die nicht chemisch gebundene Feuchtigkeit herausgelöst. Die Gewichtsdifferenz aus Startgewicht und Endgewicht bei Gewichtskonstanz wird durch das Endgewicht geteilt und so die Restfeuchte in % bestimmt.

### Testmethode 2: Calciumcarbid Methode.

Hier wird eine Probe entnommen und in eine Flasche ("CM Flasche") gegeben. Dazu kommen Stahlkugeln und Glasampullen mit Calciumcarbidfüllung. Dann wird die CM Flasche geschüttelt, wobei das Calciumcarbid freigesetzt wird. Das Restwasser der Probe reagiert mit dem Calciumcarbid und entwickelt ein Gas. Der durch das Gas entstehende Gasdruck wird ermittelt und daraus die Restfeuchte bestimmt.

Weitere Methoden zur Bestimmung der Restfeuchte sind laut DIN EN 18560 nicht zugelassen.

Betrachtung der Testergebnisse des Standardestrichs mit den Baustoffadditiven 1 bis 11 sowie ohne Baustoffadditiv:
Zum Vergleich der Trocknungseigenschaften von Zementen mit den Baustoffadditiven der Varianten 1 bis 11 sowie ohne Baustoffadditiv, um also den Grad der beschleunigten Trocknung zu ermitteln, wird jeweils ein Estrich CTF4 gemäß Beispiel 1 mit den verschiedenen Baustoffadditiven bzw. ohne Baustoffadditiv hergestellt und das Trocknungsverhalten dieser Estriche verglichen. Die Restfeuchteermittlung erfolgte nach Testmethode 1 (gravimetrische Feuchtemessung im Darr-Ofen) Die Ergebnisse sind in der folgenden Tabelle 2 dargestellt:

### Baustoffadditiv

### Wirkungsgrad des Baustoffadditivs

**Tabelle 2: Restfeuchte bei Verwendung verschiedener Baustoffadditive**

| Beschleuniger für Estrich CTF4 | | | | | |
|---|---|---|---|---|---|
| Variante | Komponente a | Komponente b | Komponente c | Restfeuchte 3-Tage* | Restfeuchte 7-Tage* |
| 1 | PEG 4000 | U Flakes | Antifoam LVW | 4,38% | 3,24% |
| 2 | PEG 8000 | U Flakes | Xiameter AF-0400 | 4,70% | 3,18% |
| 3 | PEG 6000 | U Flakes | Dispelair 707 | 3,05% | 3,12% |
| 4 | PEG 500 | U Flakes | Berolan DF-100 | 4,65% | 3,43% |
| 5 | PEG 1000 | U Flakes | Dispelair 268 | 3,41% | 2,97% |
| 6 | PEG 2000 | U Flakes | Xiameter AFE-1266 | 3,11% | 2,89% |
| 7 | PEG 10000 | U Flakes | Hoesch FDP | 3,67% | 3,07% |
| 8 | PEG 12000 | U Flakes | Hoesch LVW | 4,22% | 3,16% |
| 9 | PEG 1500 | U Flakes | KCC BC 2670 | 3,10% | 2,86% |
| 10 | PEG 2000 | U Flakes | KCC Foam-Clear Esca-NP | 3,27% | 2,96% |
| 11 | MPEG 750 | U Flakes | KCC Foam-Clear Esca-NP | 3,08% | 2,76% |
| 12 | 0-Muster, keine Beigabe TB | | | 5,43% | 3,69% |

| | | | | | |
|---|---|---|---|---|---|
| * Restfeuchte ermittelt durch gravimetrische Feuchtemessung gemäß DIN EN 18560 Teil 1 im Darr Ofen | | | | | |

Je nach Zusammensetzung des Bindemittels und des eingesetzten Baustoffadditivs ergeben sich bei den Beispielmischungen Unterschiede im Trocknungsverhalten, wobei die Trocknungsdauer der Varianten mit Baustoffadditiv im Rahmen dieser Patentschrift immer geringer ist als die ohne Baustoffadditiv.

## Patentansprüche

1. Baustoffadditiv für einen Baustoff auf Zementbasis, bestehend aus einer Wirkkomponente, die aus folgenden Substanzen besteht:
a) 35 bis 95 Gew.-%, insbesondere 50 bis 90 Gew.-%, mindestens eines Polyethylenglykols,
b) 5 bis 45 Gew.-%, insbesondere 10 bis 40 Gew.-%, mindestens einer Verbindung ausgewählt aus der Gruppe bestehend aus natürlichen ethoxylierten Harzen und ethoxylierten Kunstharzen und
c) 0 bis 40 Gew.-%, insbesondere 0,1 bis 35 Gew.-%, mindestens eines Entschäumers,
wobei die Summe der Komponenten a), b) und c) 100 Gew.-% ergibt.

2. Baustoffadditiv nach Anspruch 1, **dadurch gekennzeichnet, dass** die Wirkkomponente aus
a) 55 bis 85 Gew.-% mindestens eines Polyethylenglykols,
b) 12 bis 35 Gew.-% mindestens einer Verbindung ausgewählt aus der Gruppe bestehend aus natürlichen ethoxylierten Harzen und ethoxylierten Kunstharzen und
c) 2 bis 30 Gew.-% mindestens eines Entschäumers
besteht.

3. Baustoffadditiv nach Anspruch 2, **dadurch gekennzeichnet, dass** die Wirkkomponente aus
a) 65 bis 80 Gew.-% mindestens eines Polyethylenglykols,
b) 15 bis 30 Gew.-% einer Verbindung ausgewählt aus der Gruppe bestehend aus natürlichen ethoxylierten Harzen und ethoxylierten Kunstharzen und
c) 4 bis 25 Gew.-% mindestens eines Entschäumers
besteht.

4. Baustoffadditiv nach einem der Ansprüche 1 bis 3, **dadurch gekennzeichnet, dass** die Substanz b) ausgewählt ist aus mindestens einer Verbindung der Gruppe bestehend aus Tallöl, Wurzelharz, Balsamharz, Kolophonium und Addukten von Maleinsäure, wobei Kolophonium besonders bevorzugt ist.

5. Baustoffadditiv nach einem der Ansprüche 1 bis 4, **dadurch gekennzeichnet, dass** das Baustoffadditiv als Zusatzkomponente neben der Wirkkomponente weiterhin ein Salz, ein Mittel zur Einstellung des pH-Werts, ein Antioxidationsmittel, eine Verarbeitungshilfe, ein Verflüssigungsmittel und/oder ein Konservierungsmittel enthält.

6. Baustoffadditiv nach einem der Ansprüche 1 bis 5, **dadurch gekennzeichnet, dass** die Substanz c) ausgewählt ist aus der Gruppe bestehend aus silikonbasierten, polymerbasierten und mineralölbasierten Entschäumern sowie Entschäumern auf Basis von pflanzlichen oder tierischen Ölen, wobei die polymerbasierten und die mineralölbasierten Entschäumer bevorzugt sind.

7. Baustoffadditiv nach einem der Ansprüche 1 bis 6, **dadurch gekennzeichnet, dass** es als Hilfsmittel Wasser enthält, wobei der Wasseranteil 0,1 bis 90 Gew.-%, vorzugsweise 30 bis 85 Gew.-%, insbesondere 40 bis 75 Gew.-%, bezogen auf das gesamte Baustoffadditiv, beträgt.

8. Verwendung des Baustoffadditivs nach einem der Ansprüche 1 bis 7 als Trocknungsbeschleuniger für Baustoffe auf Zementbasis.

9. Verwendung des Baustoffadditivs nach einem der Ansprüche 1 bis 7 als Festigkeitsverstärker für Beton und Betonprodukte.

10. Verwendung des Baustoffadditivs nach einem der Ansprüche 1 bis 7 als Verarbeitungshilfe für Beton.

11. Verwendung nach einem der Ansprüche 8 bis 10, **dadurch gekennzeichnet, dass** der Gewichtsanteil des Baustoffadditivs an der Mischung aus Baustoff und Baustoffadditiv von 0,05 bis 1 Gew.-‰, insbesondere von 0,1 bis 0,5 Gew.-‰, beträgt.

12. Baustoff auf Zementbasis, **dadurch gekennzeichnet, dass** der Baustoff des Weiteren ein Baustoffadditiv nach einem der Ansprüche 1 bis 7 enthält.

13. Baustoff nach Anspruch 12, **dadurch gekennzeichnet, dass** der Baustoff von 0,05 bis 1 Gew- ‰, vorzugsweise 0,1 bis 0,5 Gew- ‰ des Baustoffadditivs enthält.

14. Baustoff nach Anspruch 12 oder 13, **dadurch gekennzeichnet, dass** das Baustoffadditiv in gefriergetrockneter Form enthalten ist.

15. Baustoff nach einem der Ansprüche 12 bis 14, **dadurch gekennzeichnet, dass** der Baustoff ein vorgefertigtes Fertigbetonelement, ein Betonformteil, ein Baustellenbeton, ein Transportbeton oder ein Estrich, insbesondere ein Fließestrich, ist.

## Claims

1. A building material additive for a cement-based building material, consisting of an active component which consists of the following substances:
a) 35 to 95% by weight, in particular 50 to 90% by weight, of at least one polyethylene glycol,
b) 5 to 45% by weight, in particular 10 to 40% by weight, of at least one compound selected from the group consisting of natural ethoxylated resins and ethoxylated synthetic resins, and
c) 0 to 40% by weight, in particular 0.1 to 35% by weight, of at least one defoamer,
wherein the sum of components a), b) and c) is 100% by weight.

2. The building material additive according to claim 1, **characterized in that** the active component consists of:
a) 55 to 85% by weight of at least one polyethylene glycol,
b) 12 to 35% by weight of at least one compound selected from the group consisting of natural ethoxylated resins and ethoxylated synthetic resins, and
c) 2 to 30% by weight of at least one defoamer.

3. The building material additive according to claim 2, **characterized in that** the active component consists of:
a) 65 to 80% by weight of at least one polyethylene glycol,
b) 15 to 30% by weight of a compound selected from the group consisting of natural ethoxylated resins and ethoxylated synthetic resins, and
c) 4 to 25% by weight of at least one defoamer.

4. The building material additive according to any one of claims 1 to 3, **characterized in that** substance b) is selected from at least one compound of the group consisting of tall oil, wood rosin, balsam resin, colophony and adducts of maleic acid, wherein colophony is particularly preferred.

5. The building material additive according to any one of claims 1 to 4, **characterized in that** the building material additive, in addition to the active component, further contains a salt, an agent for adjusting the pH value, an antioxidant, a processing aid, a plasticizer and/or a preservative.

6. The building material additive according to any one of claims 1 to 5, **characterized in that** substance c) is selected from the group consisting of silicone-based, polymer-based and mineral-oil-based defoamers as well as defoamers based on vegetable or animal oils, wherein the polymer-based and the mineral-oil-based defoamers are preferred.

7. The building material additive according to any one of claims 1 to 6, **characterized in that** it contains water as an auxiliary agent, wherein the water content is 0.1 to 90% by weight, preferably 30 to 85% by weight, in particular 40 to 75% by weight, based on the total building material additive.

8. Use of the building material additive according to any one of claims 1 to 7 as a drying accelerator for cement-based building materials.

9. Use of the building material additive according to any one of claims 1 to 7 as a strength enhancer for concrete and concrete products.

10. Use of the building material additive according to any one of claims 1 to 7 as a processing aid for concrete.

11. Use according to any one of claims 8 to 10, **characterized in that** the weight proportion of the building material additive in the mixture of building material and building material additive is from 0.05 to 1 ‰ by weight, in particular from 0.1 to 0.5 ‰ by weight.

12. A cement-based building material, **characterized in that** the building material further contains a building material additive according to any one of claims 1 to 7.

13. The building material according to claim 12, **characterized in that** the building material contains from 0.05 to 1 ‰ by weight, preferably 0.1 to 0.5 ‰ by weight, of the building material additive.

14. The building material according to claim 12 or 13, **characterized in that** the building material additive is contained in freeze-dried form.

15. The building material according to any one of claims 12 to 14, **characterized in that** the building material is a prefabricated concrete element, a concrete molded part, a site-mixed concrete, a ready-mixed concrete or a screed, in particular a flowing screed.

## Revendications

1. Additif pour matériau de construction pour un matériau de construction à base de ciment, constitué d'un composant actif qui est constitué des substances suivantes :
a) 35 à 95 % en poids, notamment 50 à 90 % en poids, d'au moins un polyéthylène glycol,
b) 5 à 45 % en poids, notamment 10 à 40 % en poids, d'au moins un composé choisi dans le groupe constitué par les résines éthoxylées naturelles et les résines éthoxylées synthétiques, et
c) 0 à 40 % en poids, notamment 0,1 à 35 % en poids, d'au moins un agent antimousse,
la somme des composants a), b) et c) étant égale à 100 % en poids.

2. Additif pour matériau de construction selon la revendication 1, **caractérisé en ce que** le composant actif est constitué de
a) 55 à 85 % en poids d'au moins un polyéthylène glycol,
b) 12 à 35 % en poids d'au moins un composé choisi dans le groupe constitué par les résines éthoxylées naturelles et les résines éthoxylées synthétiques, et
c) 2 à 30 % en poids d'au moins un agent antimousse.

3. Additif pour matériau de construction selon la revendication 2, **caractérisé en ce que** le composant actif est constitué de
a) 65 à 80 % en poids d'au moins un polyéthylène glycol,
b) 15 à 30 % en poids d'un composé choisi dans le groupe constitué par les résines éthoxylées naturelles et les résines éthoxylées synthétiques et
c) 4 à 25 % en poids d'au moins un agent antimousse.

4. Additif pour matériau de construction selon l'une quelconque des revendications 1 à 3, **caractérisé en ce que** la substance b) est choisie parmi au moins un composé du groupe constitué par le tallöl, la résine de racine, la résine de baume, la colophane et les adduits de l'acide maléique, la colophane étant particulièrement préférée.

5. Additif pour matériau de construction selon l'une quelconque des revendications 1 à 4, **caractérisé en ce que** l'additif pour matériau de construction contient en outre, en tant que composant supplémentaire en plus du composant actif, un sel, un agent d'ajustement du pH, un antioxydant, un adjuvant d'usinage, un fluidifiant et/ou un conservateur.

6. Additif pour matériau de construction selon l'une quelconque des revendications 1 à 5, **caractérisé en ce que** la substance c) est choisie dans le groupe constitué par les agents antimousse à base de silicone, à base de polymère et à base d'huile minérale, ainsi que les agents antimousse à base d'huiles végétales ou animales, les agents antimousse à base de polymère et à base d'huile minérale étant préférés.

7. Additif pour matériau de construction selon l'une quelconque des revendications 1 à 6, **caractérisé en ce qu'**il contient de l'eau en tant qu'adjuvant, la proportion d'eau étant de 0,1 à 90 % en poids, de préférence de 30 à 85 % en poids, notamment de 40 à 75 % en poids, par rapport à l'additif pour matériau de construction total.

8. Utilisation de l'additif pour matériau de construction selon l'une quelconque des revendications 1 à 7 en tant qu'accélérateur de séchage pour des matériaux de construction à base de ciment.

9. Utilisation de l'additif pour matériau de construction selon l'une quelconque des revendications 1 à 7 en tant que renforçateur de résistance pour le béton et les produits en béton.

10. Utilisation de l'additif pour matériau de construction selon l'une quelconque des revendications 1 à 7 en tant qu'adjuvant d'usinage pour le béton.

11. Utilisation selon l'une quelconque des revendications 8 à 10, **caractérisée en ce que** la proportion en poids de l'additif pour matériau de construction dans le mélange de matériau de construction et d'additif pour matériau de construction est de 0,05 à 1 ‰ en poids, notamment de 0,1 à 0,5 ‰ en poids.

12. Matériau de construction à base de ciment, **caractérisé en ce que** le matériau de construction contient en outre un additif pour matériau de construction selon l'une quelconque des revendications 1 à 7.

13. Matériau de construction selon la revendication 12, **caractérisé en ce que** le matériau de construction contient de 0,05 à 1 ‰ en poids, de préférence de 0,1 à 0,5 ‰ en poids, de l'additif pour matériau de construction.

14. Matériau de construction selon la revendication 12 ou 13, **caractérisé en ce que** l'additif pour matériau de construction est contenu sous forme lyophilisée.

15. Matériau de construction selon l'une quelconque des revendications 12 à 14, **caractérisé en ce que** le matériau de construction est un élément préfabriqué en béton prêt à l'emploi, une pièce moulée en béton, un béton de chantier, un béton transporté ou une chape, notamment une chape fluide.
